(19) Europäisches Patentamt European Patent Office Office européen des brevets

(11) **EP 4 506 622 A1**

(12) **EUROPEAN PATENT APPLICATION**

(43) Date of publication:
**12.02.2025 Bulletin 2025/07**

(21) Application number: **24188174.7**

(22) Date of filing: **12.07.2024**

(51) International Patent Classification (IPC):
**F24C 7/08** (2006.01)    **G06N 20/10** (2019.01)
**G06V 10/00** (2022.01)

(52) Cooperative Patent Classification (CPC):
**F24C 7/085; G06N 20/10; G06V 20/68**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023 KR 20230104573**

(71) Applicant: **LG Electronics Inc.**
**Yeongdeungpo-gu**
**Seoul 07336 (KR)**

(72) Inventors:
• **KIM, Jaehong**
  **06772 Seoul (KR)**

• **JUNG, Jiwook**
  **06772 Seoul (KR)**
• **KIM, Hyoeun**
  **06772 Seoul (KR)**
• **JUNG, Yeonjee**
  **06772 Seoul (KR)**
• **JUNG, Hyoungho**
  **06772 Seoul (KR)**
• **JEON, Hyejeong**
  **06772 Seoul (KR)**

(74) Representative: **Schornack, Oliver**
**Wuesthoff & Wuesthoff**
**Patentanwälte und Rechtsanwalt PartG mbB**
**Schweigerstraße 2**
**81541 München (DE)**

(54) **COOKING DEVICE AND OPERATING METHOD THEREOF**

(57)    A cooking device according to an embodiment of the present disclosure can comprise: a cooking chamber; a heating unit configured to heat the cooking chamber; a camera configured to photograph a food located inside the cooking chamber; a user input unit configured to receive a user input; and a processor configured to: identify a type of the food from a food image photographed by the camera, obtain visual attribute information indicating a cooking state of the food from the user input, and control the heating unit to cook the food based on cooking information matched to the type of food and the visual attribute information.

# FIG. 4

```
┌────────────────────────────────────┐
│  obtain a food image of food       │── S401
└────────────────────────────────────┘
                 │
┌────────────────────────────────────┐
│ identify the type of food from the │── S403
│           food image               │
└────────────────────────────────────┘
                 │
┌────────────────────────────────────┐
│        obtain a user input         │── S405
└────────────────────────────────────┘
                 │
┌────────────────────────────────────┐
│      extract visual attribute      │── S407
│    information from the user input │
└────────────────────────────────────┘
                 │
┌────────────────────────────────────┐
│ obtain cooking information         │── S409
│ corresponding to the visual        │
│ attribute information              │
└────────────────────────────────────┘
                 │
┌────────────────────────────────────┐
│  cook food according to the        │── S411
│  obtained cooking information      │
└────────────────────────────────────┘
```

EP 4 506 622 A1

**Description**

[Technical Field]

The present disclosure relates to a cooking device, and more particularly, to a cooking device for providing an expected cooking status of food.

[Background Art]

A cooking device refers to a device or a home appliance for cooking by applying heat to a cooking object to be cooked. A cooking device using heat such as an oven is an essential home appliance in daily life.
In a situation where cooking is made using a cooking device, it is common for a person to continuously check a state or set a temperature and time to cook.
In addition, if food is cooked using a cooking device, an existing cooking image or an image on the Internet is provided as an image of an expected completion of cooking of the food.
However, conventionally, when cooking food, there is a limit to identifying only the type of food and providing only a uniform cooking mode suitable for the identified type of food.
Accordingly, there is a problem in that the user's cooking needs are not met because the cooking state of the food specifically desired by the user cannot be reflected.

[Disclosure]

[Technical Problem]

An object of the present disclosure is to automatically cook food according to the cooking state of the food included in a user's voice command.
An object of the present disclosure is to automatically cook food according to a user's preference by recognizing a speaker's cooking preference through voice.

[Technical Solution]

A cooking device according to an embodiment of the present disclosure can comprise: a cooking chamber; a heating unit configured to heat the cooking chamber; a camera configured to photograph a food located inside the cooking chamber; a user input unit configured to receive a user input; and a processor configured to: identify a type of the food from a food image photographed by the camera, obtain visual attribute information indicating a cooking state of the food from the user input, and control the heating unit to cook the food based on cooking information matched to the type of food and the visual attribute information.
A method of operating a cooking device including a cooking chamber, a heating unit for heating the cooking chamber, a camera for photographing food located inside the cooking chamber, and a user input unit for receiving a user input, according to an embodiment of the present disclosure can comprise: identifying a type of food from the food image photographed by the camera; obtaining visual attribute information indicating a cooking state of the food from the user input; and cooking the food with cooking information matching the type of food and the visual attribute information.

[Advantageous Effects]

According to an embodiment of the present disclosure, food can be cooked in an optimal state according to a user's cooking needs. Accordingly, usability and convenience of the cooking device can be greatly improved.
According to an embodiment of the present disclosure, the user can automatically cook food only by uttering a desired cooking state without a separate complicated input, so convenience can be greatly increased.

[Description of Drawings]

Fig. 1 is a block diagram illustrating a cooking device according to an exemplary embodiment of the present disclosure.
FIG. 2 is a perspective view of a cooking device according to an embodiment of the present disclosure.
FIG. 3 is a perspective view illustrating a state in which a door is opened in the cooking device of FIG. 2.

FIG. 4 is a flowchart illustrating a method of operating a cooking device according to an exemplary embodiment of the present disclosure.

FIGS. 5A to 5C are diagrams illustrating visual attribute information of food acquired using a large language model according to an embodiment of the present disclosure.

FIG. 6 is a diagram illustrating cooking information matched with visual attribute information according to an embodiment of the present disclosure.

FIG. 7 is a diagram for explaining a method of operating a cooking device performed after food is cooked according to an embodiment of the present disclosure.

FIGS. 8A and 8B are diagrams illustrating a process of outputting a cooking completion notification according to a user's voice command.

FIG. 9 is a diagram for explaining a multi-modal model according to an embodiment of the present disclosure.

FIG. 10 is a flowchart illustrating a method of operating a cooking device according to another exemplary embodiment of the present disclosure.

FIG. 11 is a diagram for explaining an example of automatically providing a cooking mode through a food image according to another embodiment of the present disclosure.

[Best Mode]

Hereinafter, embodiments relating to the present disclosure will be described in detail with reference to the drawings. The suffixes "module" and "unit" for components used in the description below are assigned or mixed in consideration of easiness in writing the specification and do not have distinctive meanings or roles by themselves. Hereinafter, the embodiments disclosed in this specification will be described in detail with reference to the accompanying drawings, but the same or similar elements are given the same reference numerals regardless of reference numerals, and redundant description thereof will be omitted. The suffixes 'module' and 'unit' for the components used in the following description are given or used together in consideration of ease of writing the specification, and do not have meanings or roles that are distinct from each other by themselves. In addition, in describing the embodiments disclosed in this specification, if it is determined that a detailed description of a related known technology can obscure the gist of the embodiment disclosed in this specification, the detailed description thereof will be omitted. In addition, the accompanying drawings are only for easy understanding of the embodiments disclosed in this specification, the technical idea disclosed in this specification is not limited by the accompanying drawings, and all changes and technical scope of the present disclosure, it should be understood to include equivalents or substitutes.

Terms including ordinal numbers, such as first and second, can be used to describe various components, but the components are not limited by the terms. These terms are only used for the purpose of distinguishing one component from another.

It is understood that if a component is referred to as being 'connected' or 'connected' to another component, it can be directly connected or connected to the other component, but other components can exist in the middle. It should be. On the other hand, if a component is referred to as being 'directly connected' or 'directly connected' to another component, it should be understood that no other component exists in the middle.

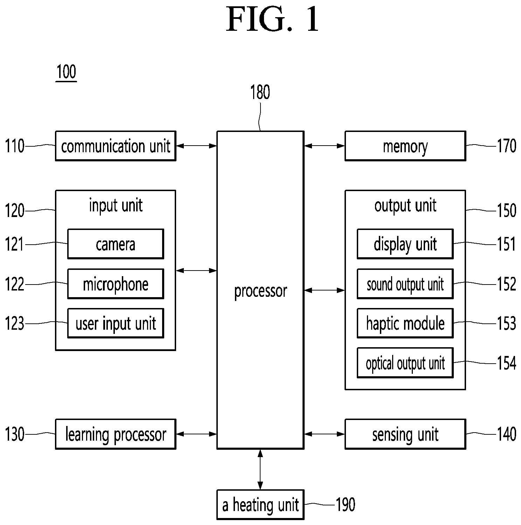

FIG. 1 is a block diagram illustrating a cooking device according to an exemplary embodiment of the present disclosure.

Referring to FIG. 1, the cooking device 100 can include a communication unit 110, an input unit 120, a learning processor 130, a sensing unit 140, an output unit 150, a memory 170, a processor 180, and a heating unit 190 can be included.

The communication unit 110 can transmit/receive data with external devices such as other AI devices or AI servers using wired/wireless communication technology. For example, the communication unit 110 can transmit/receive sensor information, a user input, a learning model, a control signal, and the like with external devices.

At this time, communication technologies used by the communication unit 110 include Global System for Mobile communication (GSM), Code Division Multi Access (CDMA), Long Term Evolution (LTE), 5G, Wireless LAN (WLAN), and Wi-Fi (Wireless-Fidelity), Bluetooth™, Radio Frequency Identification (RFID), Infrared Data Association (IrDA), ZigBee, and Near Field Communication (NFC).

The communication unit 110 can also be referred to as a communication modem or a communication circuit.

The input unit 120 can acquire various types of data.

At this time, the input unit 120 can include a camera for inputting a video signal, a microphone for receiving an audio signal, and a user input unit for receiving information from a user. Here, a camera or microphone can be treated as a sensor, and signals obtained from the camera or microphone can be referred to as sensing data or sensor information.

The input unit 120 can obtain learning data for model learning and input data to be used when obtaining an output using the learning model. The input unit 120 can obtain raw input data, and in this case, the processor 180 or the learning processor 130 can extract input feature as preprocessing of the input data.

The input unit 120 can include a camera 121 for inputting a video signal, a microphone 122 for receiving an audio signal, and a user input unit 123 for receiving information from a user.

Voice data or image data collected by the input unit 120 can be analyzed and processed as a user's control command.

The input unit 120 is for inputting image information (or signal), audio information (or signal), data, or information input from a user. For inputting image information, the cooking device 100 can include one or a plurality of cameras 121 can be provided.

The camera 121 processes an image frame such as a still image or a moving image obtained by an image sensor in a video call mode or a capturing mode. The processed image frame can be displayed on the display unit 151 or stored in the memory 170.

The microphone 122 processes external sound signal into electrical voice data. The processed voice data can be used in various ways according to the function (or application program being executed) being performed in the cooking device 100. Meanwhile, various noise cancellation algorithms can be applied to the microphone 122 to remove noise generated in the process of receiving an external sound signal.

The user input unit 123 is for receiving information from a user, if information is input through the user input unit 123, the processor 180 can control the operation of the cooking device 100 to correspond to the input information. The user input unit 123 may be named user input interface.

The user input unit 123 is a mechanical input means (or a mechanical key, for example, a button located on the front/rear or side of the cooking device 100, a dome switch, a jog wheel, a jog switch, etc.) and a touch input means. As an example, the touch input means consists of a virtual key, soft key, or visual key displayed on a touch screen through software processing, or a part other than the touch screen. It can be made of a touch key (touch key) disposed on.

The learning processor 130 can learn a model composed of an artificial neural network using training data. Here, the learned artificial neural network can be referred to as a learning model. The learning model can be used to infer a result value for new input data other than learning data, and the inferred value can be used as a basis for a decision to perform a certain operation.

At this time, the learning processor 130 can perform AI processing together with the learning processor of the AI server.

In this case, the learning processor 130 can include a memory integrated or implemented in the cooking device 100. Alternatively, the learning processor 130 can be implemented using the memory 170, an external memory directly coupled to the cooking device 100, or a memory maintained in an external device.

The sensing unit 140 can obtain at least one of internal information of the cooking device 100, surrounding environment information of the cooking device 100, and user information by using various sensors.

The sensors included in the sensing unit 140 include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a LiDAR sensor and radar, etc.

The output unit 150 can generate an output related to sight, hearing, or touch.

The output unit 150 can include a display unit that outputs visual information, a speaker that outputs auditory information, and a haptic module that outputs tactile information.

The output unit 150 can include at least one of a display unit 151, a sound output unit 152, a haptic module 153, and an optical output unit 154.

The display unit 151 displays (outputs) information processed by the cooking device 100. For example, the display unit 151 can display execution screen information of an application program driven by the cooking device 100 or UI (User Interface) and GUI (Graphic User Interface) information according to such execution screen information.

The display unit 151 can implement a touch screen by forming a mutual layer structure or integrally with the touch sensor. Such a touch screen can function as a user input unit 123 providing an input interface between the cooking device 100 and the user, and can provide an output interface between the terminal 100 and the user.

The audio output unit 152 can output audio data received from the communication unit 110 or stored in the memory 170 in reception of a call signal, communication mode or recording mode, voice recognition mode, or broadcast reception mode.

The sound output unit 152 can include at least one of a receiver, a speaker, and a buzzer.

The haptic module 153 generates various tactile effects that a user can feel. A representative example of the tactile effect generated by the haptic module 153 can be vibration.

The light output unit 154 outputs a signal for notifying occurrence of an event using light from a light source of the cooking device 100. Examples of event occurring in the cooking device 100 can include message reception, call signal reception, missed calls, alarms, schedule notifications, e-mail reception, and information reception through applications.

The memory 170 can store data supporting various functions of the cooking device 100. For example, the memory 170 can store input data obtained from the input unit 120, learning data, a learning model, a learning history, and the like.

The processor 180 can determine at least one executable operation of the cooking device 100 based on information determined or generated using a data analysis algorithm or a machine learning algorithm. Also, the processor 180 can perform the determined operation by controlling components of the cooking device 100.

To this end, the processor 180 can request, retrieve, receive, or utilize data from the learning processor 130 or the memory 170, control components of the cooking device 100 for performing a predicted operation or an operation determined to be desirable among the at least one executable operation.

In this case, the processor 180 can generate a control signal for controlling the external device and transmit the generated control signal to the external device if it is necessary to link the external device to perform the determined operation.

The processor 180 can obtain intention information for a user input and determine a user's requirement based on the acquired intention information.

At this time, the processor 180 uses at least one of a STT (Speech To Text) engine for converting a voice input into a character string and a Natural Language Processing (NLP) engine for obtaining intention information of a natural language, and Intent information corresponding to the input can be obtained.

At this time, at least one or more of the STT engine or NLP engine can be composed of an artificial neural network at least partially trained according to a machine learning algorithm. And, at least one or more of the STT engine or the NLP engine can be learned by the learning processor 130, learned by the learning processor of the AI server, or learned by distributed processing thereof.

The processor 180 collects and stores history information including user feedback on the contents of operation or operation of the cooking device 100 and stores it in the memory 170 or the learning processor 130, or in an external device such as an AI server. can transmit The collected history information can be used to update the learning model.

The processor 180 can control at least some of the components of the cooking device 100 to drive an application program stored in the memory 170. Furthermore, the processor 180 can combine and operate two or more of the components included in the cooking device 100 to drive the application program.

The heating unit 190 can generate heat using supplied energy. The heating unit 190 can be named heater.

The heating unit 190 can generate heat using supplied electricity and heat the inside of the cooking device 100 using the generated heat.

The heating unit 190 can be provided inside the cooking chamber 12. The heating unit 190 can be disposed at a side end or a lower end of the cooking chamber 12.

The heating unit 190 can include a circuit that converts electrical energy into thermal energy.

Hereinafter, the cooking device 100 can also be referred to as an artificial intelligence cooking device 100 or an artificial intelligence oven.

Also, if the cooking device 100 is provided in a form attached to a wall, it can be referred to as a wall oven.

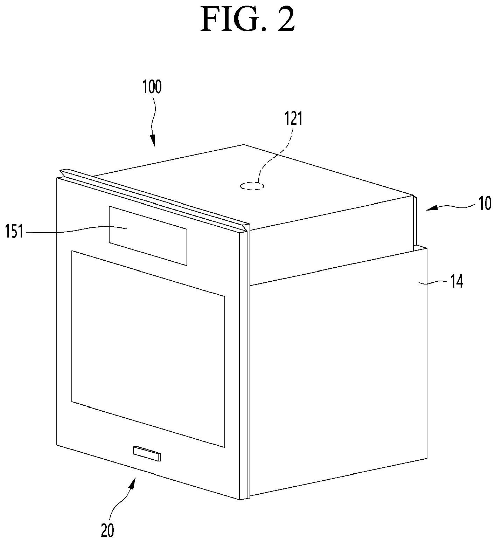

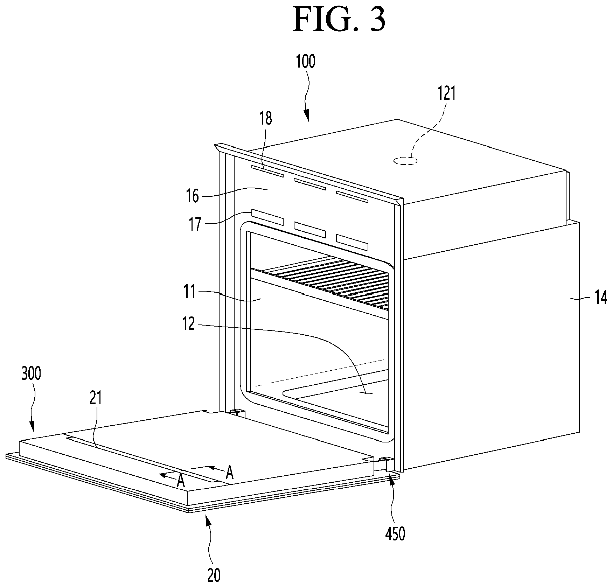

FIG. 2 is a perspective view of a cooking device according to an embodiment of the present disclosure, and FIG. 3 is a perspective view showing a door of the cooking device of FIG. 2 in an open state.

The cooking device 100 can include a main body 10 accommodating various components therein.

The main body 10 can include an inner frame 11 forming a cooking chamber 12 and an outer frame 14 surrounding the inner frame 11 outside the inner frame 11.

A camera 121 can be provided at an upper end of the inner frame 11. The camera 121 can capture the cooking chamber 12. The captureed image can be used to recognize ingredients being cooked.

A body panel 16 can be provided at the front end of the inner frame 11.

The body panel 16 can be coupled to the front end of the inner frame 11 or integrally formed with the front end.

The door 20 can be rotatably connected to the main body 10 by a hinge mechanism 450.

For example, the hinge mechanism 450 can be connected to the lower end of the door 20.

In order to minimize a temperature rise due to heat supplied to the cooking chamber 12, air outside the door 20 can flow into the door 20.

Therefore, the door 20 includes a door air outlet 21 through which the air flows out from inside the door (20), and the body 10 can include a body air inlet 17 flowed in the air flowed out through the door air outlet 21.

The body air inlet 17 can be formed in the body panel 16.

In addition, the air flowed into the body 10 through the body air inlet 17 can be flowed out the outside of the body 10 through the body air outlet 18 after flowing through the body 10.

A body air outlet 18 can also be formed in the body panel 16.

The door 20 can further include a control device 300.

The control device 300 is located on the upper side of the door 20, but is not limited thereto, and can be positioned to face the portion of the body panel 16 located on the upper side of the cooking chamber 12 in a state that the door 20 is closed.

The control device 300 can include one or more of a display unit 151 and a user input unit 123.

The display unit 151 can be implemented in the form of a touch screen capable of receiving a touch input.

Operation information of the cooking device 100 can be displayed and/or a user's operation command can be received through the control device 300.

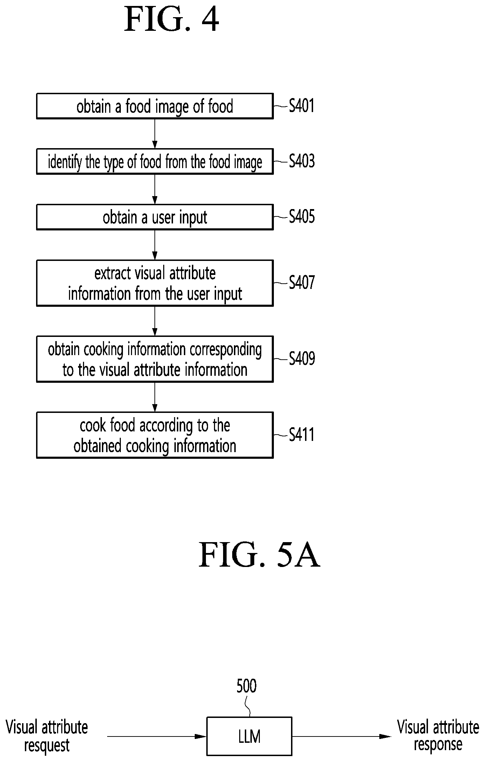

FIG. 4 is a flowchart illustrating a method of operating a cooking device according to an exemplary embodiment of the present disclosure.

Referring to FIG. 4, the processor 180 of the cooking device 100 can obtain a food image of food (S401).

In one embodiment, when food is stored in the cooking chamber 12, the processor 180 can turn on the camera 121 to photograph the interior of the cooking chamber 12. The camera 121 can be disposed at the top inside the cooking chamber 12. Cameras 121 can be provided in one or more numbers.

The processor 180 can obtain a food image by photographing food stored in the cooking chamber 12.

When receiving a cooking start command, the processor 180 can turn on the operation of the camera 121.

In another embodiment, the processor 180 can receive the food image from the user's mobile terminal through the communication unit 110. The mobile terminal can be a terminal such as a user's smart phone, smart pad, or PC.

A user can photograph food with a smartphone and transmit a food image of the photographed food to the cooking device 100.

The processor 180 can identify the type of food from the obtained food image (S403).

The processor 180 can identify the type of food using an object identification model using artificial intelligence.

The object identification model can identify the type of food from the food image through a Faster R-CNN (Regions with Convolution Neural Networks) method.

The Faster R-CNN (Regions with Convolution Neural Networks) method will be described in detail.

First, a feature map is extracted from an image through a Convolution Neural Network (CNN) model. Based on the extracted feature map, a plurality of regions of interest (RoI) are extracted. Then, RoI pooling is performed for each region of interest.

RoI pooling is a process of setting the grid so that the feature map on which the region of interest is projected fits in a predetermined H x W size, extracting the largest value for each cell included in each grid, and producing a feature map with H x W size.

A feature vector is extracted from the feature map having a size of H x W, and identification information representing the type of food can be obtained from the feature vector.

In one embodiment, the object identification model can be stored in the memory 170.

In another embodiment, the object identification model can be stored in an external server (not shown) communicating with the cooking device 100. The cooking device 100 can transmit the food image to the external server through the communication unit 110, and the external server can identify the type of food using an object identification model.

The external server can transmit information about the type of identified food to the cooking device 100.

The processor 180 can obtain a user input (S405).

The user input can be any one of a voice command uttered by the user, a text input by the user through the user input unit 123 of the cooking device 100, and a text input by the user through the mobile terminal.

In one embodiment, the processor 180 can receive a voice command uttered by a user through the microphone 122.

In another embodiment, a user can input text through a mobile terminal. The mobile terminal can transmit the input text to the communication unit 110 or the user input unit 123 of the cooking device 100.

In another embodiment, the processor 180 can receive a voice command from a user's mobile terminal. The user can utter a voice command to the mobile terminal, and the mobile terminal can transmit the received voice command to the cooking device 100.

Although a voice command is described as an example in the embodiment of the present disclosure, the cooking device 100 can receive a user input indicating a cooking state desired by the user through the user input unit 123. User input can be text input.

The processor 180 can extract visual attribute information of food from the obtained user input (S407).

In one embodiment, the processor 180 can convert voice data corresponding to the acquired voice command into text data, and obtain an analysis result for the converted text data using a natural language process (NLP) engine.

If the processor 180 acquires text from the user input unit 123 of the cooking device 100 or the mobile terminal, the processor 180 can obtain an analysis result for the text using an NLP engine.

The analysis result can include the user's intention included in the voice command. The analysis result can include an intention to cook food according to a cooking method desired by the user.

The analysis result can include a keyword representing the cooking state of the food.

The processor 180 can obtain visual attribute information corresponding to the analysis result using a large language model (LLM).

A large language model can be a model trained with a deep learning algorithm that generates response to request based on knowledge gained from analyzing large data set.

The processor 180 requests a request for attribute information including the identified type of food and an analysis result obtained from a user's voice command to the large language model, and can obtain visual attribute information from the large language model in response to the request for attribute information.

The visual attribute information can include one or more of food shape information, frozen state information, color information, texture information, or food state information.

A process of acquiring visual attribute information of food using a large language model will be described in the following drawings.

FIGS. 5A to 5C are diagrams illustrating visual attribute information of food acquired using a large language model according to an embodiment of the present disclosure.

Referring to FIG. 5A, the large language model 500 can receive a request for visual attribute information and output the visual attribute information as a response to the received request.

The processor 180 can transmit a request including a type of food and an analysis result of a voice command to the large language model 500. The large language model 500 can analyze the received request and output visual attribute information as a response.

The large language model 500 can output visual attribute information of the food if a keyword representing the type of food and the cooking state of the food is input.

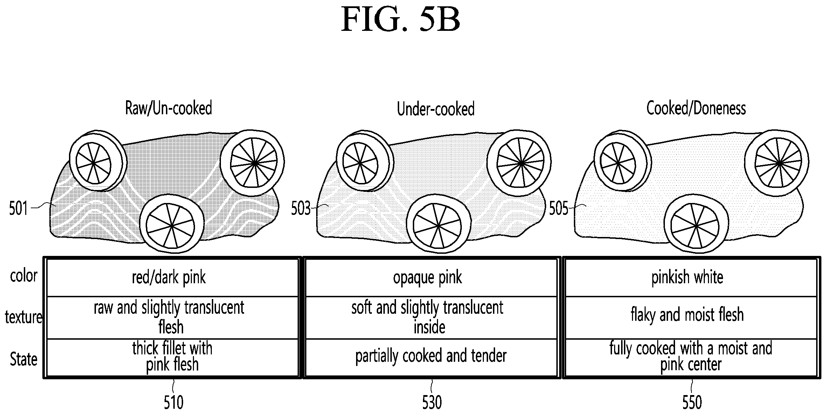

Referring to FIG. 5B, visual attribute information for salmon is shown. In FIG. 5B, it is assumed that the food stored in the cooking chamber 12 is salmon, and the user utters a voice command indicating the cooking state of the salmon.

The large language model 500 can output one among a first visual attribute information 510, a second visual attribute information 530, and a third visual attribute information 550 in response to a request including the type of food and the analysis result of the voice command.

The first visual attribute information 510 can be information output in response to a request including raw or uncooked salmon.

The second visual attribute information 530 can be information output in response to a request including an under-cooked salmon.

The third visual attribute information 550 can be information output in response to a request including a a cooked or doneness state.

For example, the user can utter a voice command of <please under-cooked> after putting the salmon in the cooking chamber 12.

The processor 180 can identify that the food is salmon using an object identification model.

The processor 180 can analyze the voice command and extract a keyword indicating a cooking state of <under-cooked>.

The processor 180 can request visual attribute information about the degree of undercooking of the salmon from the large language model 500. The large language model 500 can generate visual attribute information including color information, texture information, and state information about the degree of undercooking of salmon in response to a request.

That is, the large language model 500 can output color information, texture information, and state information corresponding to the under-cooked part of FIG. 5B.

Each of color information, texture information, and state information can include a plurality of words.

Each of the color information, texture information, and state information can be described in detail according to the cooking state of the food.

For example, the color information is "opaque pink", the texture information is "soft and slightly translucent inside", and the state information is "partially cooked and tender" that the large language model 500 responds to under-cooked salmon.

The large language model 500 can extract a plurality of template attributes matched to the type of food and the cooking state of the food from the database, and obtain a combination of the extracted template attributes as the visual attribute information.

The database can store template attributes matched to the type of food and the cooking state of the corresponding food. The database can be included in the memory 170 or stored in an external server.

The visual attribute information can be expressed in one sentence. The visual attribute information can include one sentence including color, texture, and state of food.

The large language model 500 can further output an image representing the cooking state of salmon.

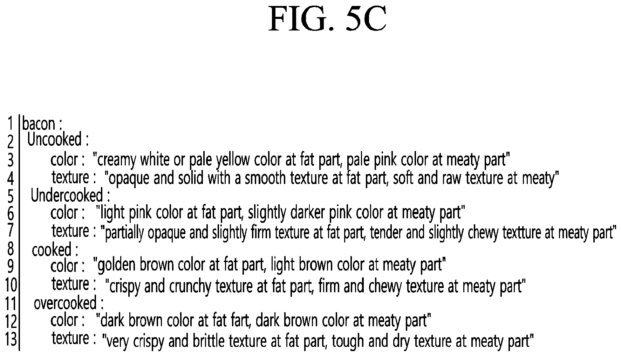

FIG. 5C is a diagram explaining a process of generating visual attribute information according to another embodiment of the present disclosure.

FIG. 5C shows visual attribute information describing the color and texture of bacon according to the cooking state if the type of food is bacon.

The visual attribute information shown in FIG. 5C can be generated by the large language model 500.

For example, if bacon and uncooked are input to the large language model 500, color information and texture information matching bacon and uncooked can be output.

Each of color information and texture information can be composed of a plurality of words.

Again, Fig. 4 will be described.

In one embodiment, the large language model can be stored in the memory 170 of the cooking device 100.

In another embodiment, the large language model can be stored in an external server. The processor 180 can transmit the type of food and the analysis result to an external server through the communication unit 110 and receive visual attribute information corresponding to the type of food and the analysis result from the external server.

The processor 180 can obtain cooking information corresponding to the extracted visual attribute information (S409).

In one embodiment, the cooking information can include one or more of a cooking time or a cooking temperature.

The memory 170 can store cooking information matched with visual attribute information for the cooking state of each food.

The processor 180 can read cooking information matching the visual attribute information from the memory 170.

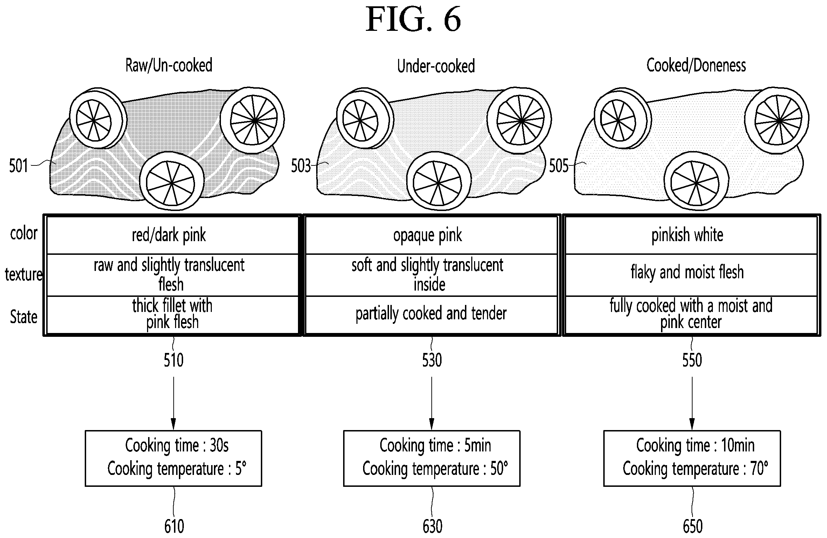

FIG. 6 is a diagram illustrating cooking information matched with visual attribute information according to an embodiment of the present disclosure.

Cooking information can be matched with visual attribute information according to each cooking state of salmon.

For example, the first visual attribute information 510 includes the first cooking information 610, the second visual attribute information 530 includes the second cooking information 630, and the third visual attribute information 550 includes the third cooking information 630. Cooking information 650 can be matched with each other.

Each piece of cooking information can include a cooking time and a cooking temperature.

In an embodiment, the processor 180 can extract stored cooking information matched with visual attribute information. The memory 170 can store a correspondence between visual attribute information and cooking information corresponding to the visual attribute information. The processor 180 can extract cooking information corresponding to visual attribute information from the memory 170.

Meanwhile, the attribute image can be matched with visual attribute information. The attribute image can be an image representing visual attribute information.

For example, the first attribute image 501 can be matched to the first visual attribute information 510, the second attribute image 503 can be matched to the second visual attribute information 530, and the third attribute image 505 can be matched to the third attribute image 505.

In another embodiment, the processor 180 can generate cooking information based on the type of food, color information, texture information, and state information.

The processor 180 can obtain cooking information from food type, color information, texture information, and state information using a cooking information generation model learned through a deep learning algorithm.

The cooking information generation model can be a model learned through supervised learning.

The training data set used for supervised learning of the cooking information generation model can include training data including food type, color information, texture information, and state information, and cooking data labeled with the training data.

The cooking information generation model can be trained to minimize a loss function representing a difference between training data and cooking data.

The cooking information generation model can be stored in the memory 170 or an external server.

Again, Fig. 4 will be described.

The processor 180 cooks food according to the obtained cooking information (S411).

The processor 180 can control the heating unit 190 to cook food located inside the cooking chamber 12 according to cooking information.

The processor 180 can control the heating unit 190 to cook food in the cooking chamber 12 at a cooking temperature and a cooking time included in the cooking information corresponding to the visual attribute information.

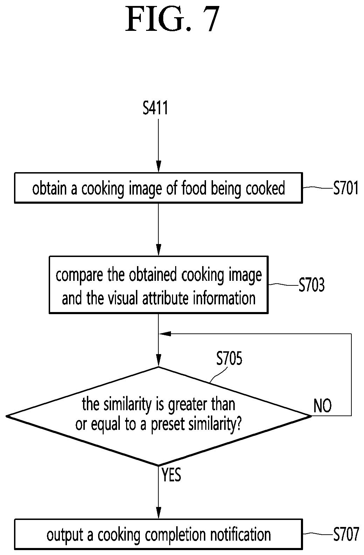

FIG. 7 is a diagram for explaining a method of operating a cooking device performed after food is cooked according to an embodiment of the present disclosure.

FIG. 7 can be steps performed after step S411 of FIG. 4.

Referring to FIG. 7, the processor 180 can obtain a cooking image of food being cooked (S701).

The processor 180 can re-photograph the food being cooked through the camera 121 to obtain a cooking image of the food.

The processor 180 can control the camera 121 to periodically photograph the food being cooked.

The processor 180 can compare the obtained cooking image and the visual attribute information (S703), and as a result of the comparison, determine whether the similarity between the cooked image and the visual attribute information is greater than or equal to a preset similarity (S705).

The processor 180 can monitor whether the food is being cooked according to the visual attribute information acquired in step S407.

The processor 180 can compare a cooking image captured through the camera 121 while cooking food with visual attribute information, and determine whether or not to proceed with cooking the food based on a comparison result.

In one embodiment, the processor 180 can compare a cooking image with the visual attribute information composed of text using an embedding model using artificial intelligence. The embedding model can be an artificial neural network-based model stored in the memory 170.

The embedding model can convert the cooking image into a first vector, convert text corresponding to the visual attribute information into a second vector, and place the converted first and second vectors into an embedded vector space.

The embedding model can measure a distance between the first vector and the second vector located in the vector space, and output (or calculate) a degree of similarity using the measured distance.

The embedding model can output a larger similarity as the measured distance is closer and a smaller similarity as the measured distance is farther.

The processor 180 can determine that cooking of the food being cooked is completed if the output similarity is greater than or equal to a preset similarity.

In another embodiment, the processor 180 can compare an attribute image corresponding to visual attribute information with a cooking image.

The processor 180 can measure a similarity between the attribute image corresponding to the visual attribute information and the cooking image.

The processor 180 can measure similarity between two images through a pixel-wise operation in image space. A pixel-wise operation can be an operation in which the same calculation is applied to each of a plurality of pixels constituting an image.

The processor 180 can obtain a mean squared error (MSE), which is a square difference between pixel values of the two images, as a similarity between the two images.

The processor 180 can obtain the measured MSE as a similarity between the two images using the following [Equation 1].

[Equation 1]

$$MSE = \frac{1}{n} \sum_{i=1}^{n} \left( Y_i - \hat{Y}_i \right)^2$$

Here, n is the total number of pixels, $Y_i$ is the i-th pixel value of the expected image, and $\hat{Y}_i$ can be the i-th pixel value of the image being cooked.

In another embodiment, the processor 180 can obtain a Frechet inception distance (FID) as a similarity between two images. The FID can be an index indicating how similar the distribution of the expected image and the distribution of the image being cooked are.

The processor 180 can obtain the calculated FID as a similarity between the two images using the following [Equation 2].

[Equation 2]

$$FID = d^2 = \|\mu_1 - \mu_2\|_2^2 - Tr(\Sigma_1 + \Sigma_2 - 2\Sigma_1\Sigma_2)$$

Since the method of measuring FID is a well-known technique, a detailed description thereof will be omitted.

In another embodiment, the processor 180 can acquire Learned Perceptual Image Patch Similarity (LPIPS) as a similarity between two images.

The processor 180 can obtain the measured LPIPS as a similarity between the two images using the following [Equation 3].

[Equation 3]

$$LPIPS = \sum_l \frac{1}{H_l W_l} \sum_{h,w} \|w^l \odot (\hat{y}_{hw}^l - \hat{y}_{0hw}^l)\|_2^2$$

Since the method of measuring LPIPS is a well-known technique, a detailed description thereof will be omitted.

The processor 180 can determine whether the measured similarity between the two images is equal to or greater than a preset similarity.

If the similarity between the cooking image and the visual attribute information is determined to be greater than or equal to a predetermined similarity, the processor 180 can output a cooking completion notification (S707).

The cooking completion notification can be a notification indicating that cooking of the food has been completed.

The cooking completion notification can be a notification indicating that the cooking image matches the visual attribute information.

The cooking completion notification can include a cooking completion image of a food cooking completion state and feedback information for receiving feedback from a user.

In one embodiment, the processor 180 can display a cooking completion notification on the display unit 151.

In another embodiment, the processor 180 can transmit a cooking completion notification to the user's mobile terminal through the communication unit 110. The user's mobile terminal can display the received cooking completion notification on the display.

As described above, according to an embodiment of the present disclosure, a user can obtain food cooked in a desired cooking condition only by uttering a cooking condition for food without a separate input for cooking the food.

Accordingly, unlike food being cooked through existing predetermined cooking modes, scalability of cooking can be greatly improved by reflecting the user's cooking needs.

Meanwhile, when it is determined that the similarity between the cooking image and the visual attribute information is less than the preset similarity, the processor 180 can continue to cook the food until the similarity reaches the preset similarity.

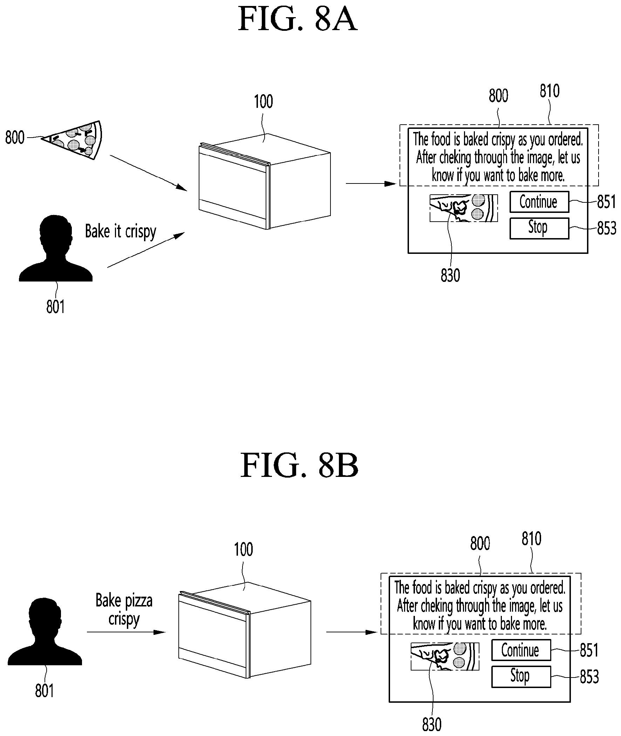

FIGS. 8A and 8B are diagrams illustrating a process of outputting a cooking completion notification according to a user's voice command.

In particular, FIG. 8A is an embodiment in which the type of food is not included in the user's voice command, and FIG. 8B is an embodiment in which the type of food is included in the user's voice command.

Referring to FIG. 8A, when a pizza 800 is put into the cooking device 100, a user 801 can utter a voice command of <Bake it crispy>.

The cooking device 100 can photograph the pizza 800 and identify the type of food as pizza based on the photographed image.

The cooking device 100 can obtain an analysis result indicating a cooking state (crispy) according to the analysis of the voice command.

The cooking device 100 can obtain visual attribute information of the pizza indicating the cooking state, and cook the pizza 800 with the cooking information matching the obtained visual attribute information.

The cooking device 100 can compare visual attribute information of the pizza with the cooking image captured during cooking. The cooking device 100 can stop the operation of the heating unit 190 and output a cooking completion notification 800 if the similarity between the visual attribute information and the cooking image is greater than or equal to a preset similarity as a result of the comparison.

The cooking completion notification 800 can include one or more of a text 810 indicating that the pizza has been completed in a desired cooking state, a cooking completion image 830 indicating the cooking completion state, a continue button 851 for continuing cooking, and a stop button 853 for stopping cooking.

Referring to FIG. 8B, when a pizza 800 is put into the cooking device 100, a user 801 can utter a voice command of <Bake pizza crispy>.

The cooking device 100 can obtain an analysis result indicating that the type of food is pizza and the cooking state is crispy according to the analysis of the voice command.

If the type of food is determined through a voice command, the cooking device 100 can not photograph the pizza 800. Accordingly, a load required for photographing the pizza 800 and analyzing the photographed image can be reduced.

The cooking device 100 can obtain visual attribute information corresponding to the cooking state and cook the pizza 800 with the cooking information matching the obtained visual attribute information.

The cooking device 100 can compare visual attribute information of the pizza with the cooking image captured during cooking. The cooking device 100 can stop the operation of the heating unit 190 and output a cooking completion notification 800 if the similarity between the visual attribute information and the cooking image is greater than or equal to a preset similarity as a result of the comparison.

In one embodiment, the cooking device 100 can display a cooking completion notification 800 on the display unit 151.

In another embodiment, the cooking device 100 can transmit a cooking completion notification 800 to the user's mobile terminal. The mobile terminal can display the received cooking completion notification 800 on the display.

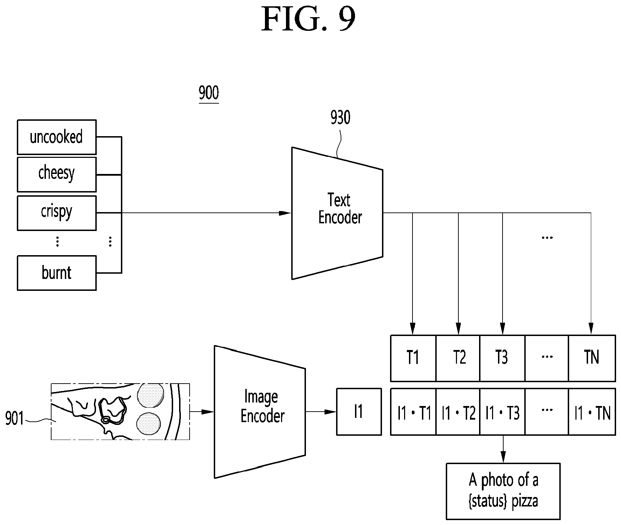

FIG. 9 is a diagram for explaining a multi-modal model according to an embodiment of the present disclosure.

The multi-modal model 900 can be a model that outputs visual attribute information of an object using image data and text data.

The multi-modal model 900 can be trained using a Contrastive Language-Image Pre-Training (CLIP) method.

CLIP (Contrastive Language-Image Pre-Training) can be a method to use a large amount of images and a large amount of texts to create pairs between each image and text, and train the model in such a way that the same pairs are located close to each other and the other pairs are far apart.

CLIP (Contrastive Language-Image Pre-Training) can map the relationship between visually similar image and related text through such a process.

The multi-modal model 900 can include an image encoder 910 and a text encoder 930.

The image encoder 910 can be the object identification model described in step S403 of FIG. 4.

That is, the image encoder 910 can identify the type of food from the food image 901 and output the identified type of food. For example, if the food image 901 is a pizza image, the image encoder 910 can output pizza I1 as a type of food.

The text encoder 930 can obtain visual attribute information from text data corresponding to a voice command uttered by a user.

The text encoder 930 can be the large language model 500 described in FIGS. 5A-5C.

If the user utters <crispy> indicating a cooking state, the text encoder 930 can output visual attribute information corresponding to <crispy>.

The visual attribute information can include food color information (T1 to T2), texture information (T3 to T6), and state information (T7 to TN).

The multi-modal model 900 can output visual attribute information representing the state of pizza from the food image 901 and text data representing the cooking state.

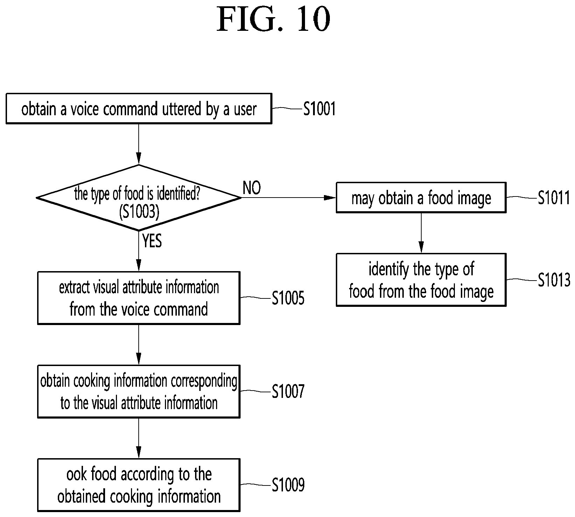

FIG. 10 is a flowchart illustrating a method of operating a cooking device according to another exemplary embodiment of the present disclosure.

In particular, FIG. 10 is a diagram illustrating a scenario that occurs depending on whether a type of food is included in a voice command uttered by a user.

Referring to FIG. 10, the processor 180 of the cooking device 100 can obtain a voice command uttered by a user (S1001).

In one embodiment, the processor 180 can receive a voice command uttered by a user through the microphone 122.

In another embodiment, the processor 180 can receive a voice command from a user's mobile terminal. The user can utter a voice command to the mobile terminal, and the mobile terminal can transmit the received voice command to the cooking device 100.

The processor 180 of the cooking device 100 can determine whether the type of food is identified from the voice command (S1003).

The processor 180 can convert voice data corresponding to a voice command into text data, and obtain an analysis result of the voice command by using a natural language process (NLP) engine for the converted text data.

The processor 180 can determine whether the type of food is included in the analysis result.

The processor 180 can compare a data set representing the types of food stored in the memory 170 with a plurality of words included in the analysis result, and determine which one of the plurality of words is included in the data set representing the types of food.

The processor 180 can determine that the type of food is identified if any one of a plurality of words is included in the data set representing the types of food.

If any one of the plurality of words is not included in the data set representing the types of food, the processor 180 can determine that the type of food has not been identified.

If the type of food is identified, the processor 180 of the cooking device 100 can extract visual attribute information from the voice command (S1005).

The processor 180 can obtain visual attribute information corresponding to the analysis result using a large language model (LLM).

The processor 180 can request an analysis result obtained from the identified type of food and the user's voice command to the large language model, and obtain visual attribute information from the large language model in response to the analysis result.

The visual attribute information can include one or more of food shape information, frozen state information, color information, texture information, or food state information.

The process of obtaining visual attribute information can use the embodiments of FIGS. 5A to 5C.

The processor 180 of the cooking device 100 can obtain cooking information corresponding to the extracted visual attribute information (S1007).

In one embodiment, the cooking information can include one or more of a cooking time or a cooking temperature.

The memory 170 can store cooking information matched with visual attribute information for the cooking state of each food.

The processor 180 can read cooking information matching the visual attribute information from the memory 170.

The processor 180 cooks food according to the obtained cooking information (S1009).

The processor 180 can control the heating unit 190 to cook food located inside the cooking chamber 12 according to cooking information.

If it is determined that the type of food is not identified from the voice command, the processor 180 of the cooking device 100 can obtain a food image by photographing the food stored in the cooking chamber 12 (S1011).

If the type of food is not identified from the voice command, the processor 180 can obtain a food image by photographing the inside of the cooking chamber 12.

The processor 180 of the cooking device 100 can identify the type of food from the food image (S1013), and can then perform step S1007.

As such, according to the embodiment of FIG. 10, if the type of food is included in the user's voice command, there is no need to separately photograph the food. That is, since there is no need to analyze the food image obtained by photographing the food, the amount of calculation according to the analysis of the food image of the cooking device 100 can be reduced.

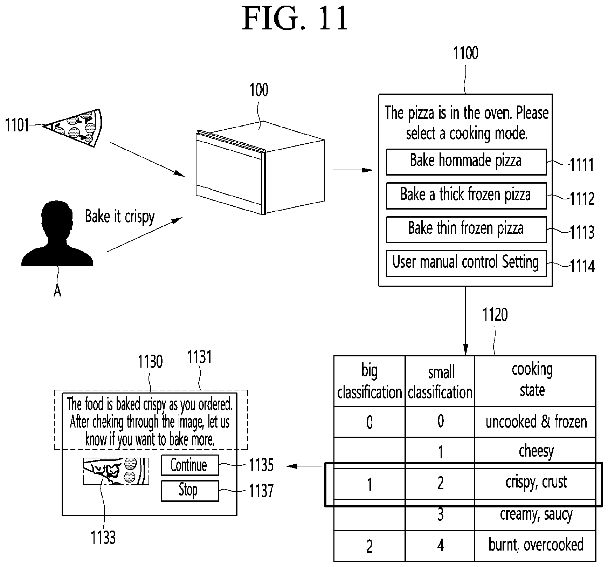

FIG. 11 is a diagram for explaining an example of automatically providing a cooking mode through a food image according to another embodiment of the present disclosure.

Referring to FIG. 11, the cooking device 100 can acquire a food image 1101 of food stored in the cooking chamber 12 and <Bake it crisply>, which is a voice command uttered by the user.

The cooking device 100 can identify the type of food from the food image 1101 and obtain a plurality of cooking modes corresponding to the identified type of food. Assume that the type of food identified is pizza.

The cooking device 100 can display a cooking mode setting window 1100 including a plurality of cooking modes 1111 to 1114.

The first cooking mode can be a homemade pizza baking mode, the second cooking mode can be a thick frozen pizza baking mode, the third cooking mode can be a thin frozen pizza baking mode, and the fourth mode can be a user manual control setting mode.

The cooking device 100 can receive an input for selecting one of a plurality of cooking modes 1111 to 1114.

The cooking device 100 can generate a plurality of cooking states 1120 corresponding to the selected cooking mode. One of the plurality of cooking states 1120 can include a crispy state indicated by a user's voice command. The cooking device 100 can extract a crispy state through analysis of a voice command.

The cooking device 100 can cook pizza using cooking information suitable for the crispy state of the selected cooking mode.

If cooking is completed, the cooking device 100 can output a cooking completion notification 1130.

The cooking completion notification 1130 can include one or more of a text 1131 indicating that the pizza has been completed in a desired cooking state, a cooking completion image 1133 indicating the cooking completion state, a continue button 1135 for continuing cooking, and a stop button 1135 for stopping cooking.

According to an embodiment of the present disclosure, the above-described method can be implemented as computer readable code on a medium on which a program is recorded. A computer-readable medium includes all types of recording devices in which data that can be read by a computer system is stored. Examples of computer-readable media include Hard Disk Drive (HDD), Solid State Disk (SSD), Silicon Disk Drive (SDD), ROM, RAM, CD-ROM, magnetic tape, floppy disk, optical data storage device, etc.

## Claims

**1.** A cooking device, comprising:

> a cooking chamber;
> a heater configured to heat the cooking chamber;
> a camera configured to photograph food located inside the cooking chamber;
> a user input interface configured to receive a user input; and
> a processor configured to:
>
>> identify a type of the food based on a food image photographed by the camera,
>> obtain visual attribute information indicating a cooking state of the food based on the user input, and
>> control the heater to heat the cooking chamber to cook the food based on cooking information corresponding to the identified type of food and the visual attribute information.

**2.** The cooking device of claim 1, wherein the processor is further configured to:
obtain the visual attribute information based on an analysis result of the user input using a large language model, LLM,

learned with a deep learning algorithm.

3. The cooking device of claim 2, wherein the processor is further configured to:

input an attribute information request including the identified type of food and the analysis result to the large language model, and
obtain the visual attribute information in response to the attribute information request from the large language model.

4. The cooking device of claim 3, wherein the visual attribute information includes at least one of color information of the food, texture information of the food, or state information of the food,
wherein, preferably, the visual attribute information is expressed in one sentence.

5. The cooking device of one of claims 1 to 4, wherein the processor is further configured to:

compare the visual attribute information with a cooking image photographed by the camera during cooking of the food, and
determine whether or not to continue cooking the food based on a result of the comparison.

6. The cooking device of claim 5, wherein:

the determination on whether to continue cooking the food is based on whether a similarity between the cooking image and the visual attribute information is greater than or equal to a preset similarity threshold, and wherein the processor is further configured to output a cooking completion notification based on the similarity being greater than or equal to the preset similarity threshold, and/or
the similarity is calculated by:

converting the cooking image to a first vector,
converting text corresponding to the visual attribute information to a second vector,
locating the converted first and second vectors in an embedded vector space,
measuring a distance between the first vector and the second vector, and
calculating the similarity using the measured distance, and/or
the cooking completion notification includes:

a cooking completion image of a state in which the cooking of the food is completed and feedback information for receiving a user feedback.

7. The cooking device of one of claims 1 to 6, wherein the user input is any one of a voice command uttered by a user, text input by the user through the user input interface, or text input by the user received through a mobile terminal.

8. A method of operating a cooking device including a cooking chamber, a heater for heating the cooking chamber, a camera for photographing food located inside the cooking chamber, and a user input interface for receiving a user input, the method comprising:

identifying a type of the food located inside the cooking chamber based on a food image photographed by the camera;
obtaining visual attribute information indicating a cooking state of the food based on the user input; and
heating the cooking chamber to cook the food based on cooking information corresponding to the identified type of food and the visual attribute information.

9. The method of the claim 8, wherein the visual attribute information is obtained based on an analysis result of the user input using a large language model (LLM) learned with a deep learning algorithm.

10. The method of claim 9, further comprising:

inputting an attribute information request including the identified type of food and the analysis result to the large language model, and
obtaining the visual attribute information in response to the attribute information request from the large language model.

11. The method of claim 10, wherein the visual attribute information includes at least one of color information of the food, texture information of the food, or state information of the food,
wherein, preferably, the visual attribute information is expressed in one sentence.

12. The method of one of claims 8 to 11, further comprising:

comparing the visual attribute information with a cooking image photographed by the camera during cooking of the food, and
determining whether or not to continue cooking the food based on a result of the comparison.

13. The method of claim 12, wherein the determining whether or not to continue cooking the food is based on whether a similarity between the cooking image and the visual attribute information is greater than or equal to a preset similarity threshold, and
the method further comprises outputting a cooking completion notification based on the similarity being greater than or equal to the preset similarity threshold.

14. The method of claim 13, wherein
the similarity is calculated by:

converting the cooking image to a first vector,
converting text corresponding to the visual attribute information to a second vector,
locating the converted first and second vectors in an embedded vector space,
measuring a distance between the first vector and the second vector, and
calculating the similarity using the measured distance, and/or
the cooking completion notification includes a cooking completion image of a state in which the cooking of the food is completed and feedback information for receiving a user feedback.

15. The method of one of claims 8 to 14, wherein the user input is any one of a voice command uttered by a user, text input by the user through the user input interface, or text input by the user received through a mobile terminal.

# FIG. 1

100

180

110 — communication unit

memory — 170

120 — input unit
121 — camera
122 — microphone
123 — user input unit

output unit — 150
display unit — 151
sound output unit — 152
haptic module — 153
optical output unit — 154

processor

130 — learning processor

sensing unit — 140

a heating unit — 190

# FIG. 2

# FIG. 3

# FIG. 4

obtain a food image of food ── S401

identify the type of food from the food image ── S403

obtain a user input ── S405

extract visual attribute information from the user input ── S407

obtain cooking information corresponding to the visual attribute information ── S409

cook food according to the obtained cooking information ── S411

# FIG. 5A

500

Visual attribute resquest → LLM → Visual attribute response

# FIG. 5B

|  | Raw/Un-cooked | Under-cooked | Cooked/Doneness |
|---|---|---|---|
| color | red/dark pink | opaque pink | pinkish white |
| texture | raw and slightly translucent flesh | soft and slightly translucent inside | flaky and moist flesh |
| State | thick fillet with pink flesh | partially cooked and tender | fully cooked with a moist and pink center |

501 — 510  503 — 530  505 — 550

EP 4 506 622 A1

# FIG. 5C

```
bacon :
 Uncooked :
     color :  "creamy white or pale yellow color at fat part, pale pink color at meaty part"
     texture :  "opaque and solid with a smooth texture at fat part, soft and raw texture at meaty"
 Undercooked :
     color :  "light pink color at fat part, slightly darker pink color at meaty part"
     texture : "partially opaque and slightly firm texture at fat part, tender and slightly chewy textture at meaty part"
 cooked :
     color :  "golden brown color at fat part, light brown color at meaty part"
     texture :  "crispy and crunchy texture at fat part, firm and chewy texture at meaty part"
 overcooked :
     color :  "dark brown color at fat fart, dark brown color at meaty part"
     texture : "very crispy and brittle texture at fat part, tough and dry texture at meaty part"
```

# FIG. 6

| | Raw/Un-cooked | Under-cooked | Cooked/Doneness |
|---|---|---|---|
| | 501 | 503 | 505 |
| color | red/dark pink | opaque pink | pinkish white |
| texture | raw and slightly translucent flesh | soft and slightly translucent inside | flaky and moist flesh |
| State | thick fillet with pink flesh | partially cooked and tender | fully cooked with a moist and pink center |
| | 510 | 530 | 550 |
| | Cooking time : 30s<br>Cooking temperature : 5° | Cooking time : 5min<br>Cooking temperature : 50° | Cooking time : 10min<br>Cooking temperature : 70° |
| | 610 | 630 | 650 |

EP 4 506 622 A1

# FIG. 7

S411

obtain a cooking image of food being cooked ——S701

compare the obtained cooking image
and the visual attribute information ——S703

S705

the similarity is greater than
or equal to a preset similarity? ——— NO

YES

output a cooking completion notification ——S707

# FIG. 8A

The food is baked crispy as you ordered.
After cheking through the image, let us
know if you want to bake more.

Continue — 851
Stop — 853

Bake it crispy

# FIG. 8B

Bake pizza
crispy

The food is baked crispy as you ordered.
After cheking through the image, let us
know if you want to bake more.

Continue — 851
Stop — 853

# FIG. 9

900

# FIG. 10

obtain a voice command uttered by a user —S1001

the type of food is identified?
(S1003)

NO → may obtain a food image —S1011

identify the type of
food from the food image —S1013

YES

extract visual attribute information
from the voice command —S1005

obtain cooking information corresponding
to the visual attribute information —S1007

ook food according to the
obtained cooking information —S1009

# FIG. 11

1100

100

1101

Bake it crispy

A

The pizza is in the oven. Please select a cooking mode.

| Bake hommade pizza | 1111 |
| Bake a thick frozen pizza | 1112 |
| Bake thin frozen pizza | 1113 |
| User manual control Setting | 1114 |

1120

| big classification | small classification | cooking state |
|---|---|---|
| 0 | 0 | uncooked & frozen |
|  | 1 | cheesy |
| 1 | 2 | crispy, crust |
|  | 3 | creamy, saucy |
| 2 | 4 | burnt, overcooked |

1130  1131

The food is baked crispy as you ordered. After cheking through the image, let us know if you want to bake more.

| Continue | 1135 |
| Stop | 1137 |

1133

Europäisches
Patentamt

European
Patent Office

Office européen
des brevets

## EUROPEAN SEARCH REPORT

**Application Number**

EP 24 18 8174

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/137311 A1 (CHAE SEUNGAH [KR] ET AL) 13 May 2021 (2021-05-13) * paragraphs [0061], [0062], [0125], [0142] - [0162], [0170], [0173] * * paragraphs [0182], [0194], [0198], [0199], [0208], [0209], [0232]; figures 1-10 * | 1-15 | INV. F24C7/08 G06N20/10 G06V10/00 |
| X | US 2021/137310 A1 (SHIM HYUNSEUNG [KR]) 13 May 2021 (2021-05-13) * paragraphs [0069], [0070], [0167] - [0170], [0181], [0226], [0231] - [0244], [0277]; figures 1-13 * | 1-15 | |
| X | US 2021/182667 A1 (MAENG JI CHAN [KR]) 17 June 2021 (2021-06-17) * paragraphs [0043], [0064], [0142] - [0146], [0156] - [0161], [0176], [0184] - [0186], [0196] * * paragraphs [0235], [0236], [0247], [0248], [0257]; claims 1,2; figures 1-9 * | 1-15 | |

**TECHNICAL FIELDS SEARCHED (IPC)**

F24C
G06V
G06N

The present search report has been drawn up for all claims

| Place of search | Date of completion of the search | Examiner |
|---|---|---|
| The Hague | 28 November 2024 | Fest, Gilles |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 8174

This annex lists the patent family members relating to the patent documents cited in  the above-mentioned European search report.
The members are as contained in the European Patent Office EDP file on
The European Patent Office is in no way liable for these particulars which are merely given for the purpose of information.

28-11-2024

| Patent document cited in search report | Publication date | Patent family member(s) | | Publication date |
|---|---|---|---|---|
| US 2021137311 A1 | 13-05-2021 | KR | 20210056019 A | 18-05-2021 |
| | | US | 2021137311 A1 | 13-05-2021 |
| US 2021137310 A1 | 13-05-2021 | KR | 20210056173 A | 18-05-2021 |
| | | US | 2021137310 A1 | 13-05-2021 |
| | | WO | 2021091030 A1 | 14-05-2021 |
| US 2021182667 A1 | 17-06-2021 | KR | 20210074648 A | 22-06-2021 |
| | | US | 2021182667 A1 | 17-06-2021 |

EPO FORM P0459

For more details about this annex : see Official Journal of the European Patent Office, No. 12/82